# EUROPEAN PATENT APPLICATION

(11) **EP 4 625 607 A1**
(43) Date of publication of application: **01.10.2025**
(21) Application number: 24166245.1
(22) Date of filing: 26.03.2024
(51) Int. Cl.: H01M 10/48, H01M 50/204, H01M 50/30, H01M 50/342

(54) **VENTING ASSEMBLY**

(71) Applicant: Rimac Technology LLC, 10431 Sveta Nedelja (HR)
(72) Inventor: Farooq, Saad Abdullah, Zagreb (HR)
(74) Representative: Hoffmann Eitle

(57) **Abstract**

There is provided a venting assembly for venting gases from at least one battery cell, the venting assembly comprising: a venting element having at least one venting portion, the venting portion comprising a base element having a first surface for accommodating the at least one battery cell and a second surface facing the first surface, the venting portion comprising further at least two side walls arranged to form a venting channel beneath the second surface of the base element, the venting assembly further comprising: at least one temperature sensor arranged in the venting element for measuring the temperature of the venting element.

## Description

### Technical field

The present invention relates to the technical field of batteries. More specifically, the present invention relates to a venting assembly for venting gases from at least one battery cell.

### Background

Battery cells are playing an increasing role in energy storage for both mobility and grid storage applications.

Normally, one or more battery cells are packed within a housing of a battery module. One or more battery modules may further be packed within a housing of a battery pack. It is also possible that one or more battery cells are packed within a housing of a battery pack. Such battery pack is also called a cell-to-pack battery design (CTP).

One of the major concerns in battery packs, in particular in high voltage battery packs for mobility, for example used in electric vehicles, is the safety in a case of a safety relevant event, for example over-charge, over-temperature or crash scenario which may lead to a thermal runaway event in one or more battery cells. A thermal runaway event may be seen as a sequence of exothermic reactions occurring in a battery cell in a case of such safety relevant event and leading to an uncontrolled temperature increase in the battery cell and a generation of high temperature gases that are vented from the battery cell.

Regulations are increasingly imposing stringent safety requirements for rapidly detecting a thermal runaway event in a high voltage battery pack applied in vehicles, for example electric vehicles. Examples of such regulations are UN ECE R100 and GB/T 38031. In these regulations it is clearly stipulated that in case of an onset of a thermal runaway event, the system shall be capable of detecting and alerting the occupants of the vehicle to leave the vehicle within a 5-minute time window.

Coping with these regulations requires several factors to be satisfied in the detection of a thermal runaway event, such as stable detection strategy for detecting a thermal runaway event in a battery pack, while the battery pack is in an operation or non-operation state, quick response method for detecting thermal runaway events, robust solution which is agnostic to the chemistry of the battery cells in the battery pack, battery cell form factor and battery pack system configuration (for example whether the battery cells are connected in series/parallel). Further, the detection strategy needs to be effective and reliable, cost saving as well as scalable to various battery packs sizes.

Therefore, there is a need for providing for a configuration that enables for an efficient detection of a thermal runaway event.

### Summary

The mentioned problems and drawbacks are addressed by the subject matter of the independent claims. Further preferred embodiments are defined in the dependent claims.

In one aspect of the present invention there is provided a venting assembly for venting gases from at least one battery cell, the venting assembly comprising: a venting element having at least one venting portion, the venting portion comprising a base element having a first surface for accommodating the at least one battery cell and a second surface facing the first surface, the venting portion comprising further at least two side walls arranged to form a venting channel beneath the second surface of the base element, the venting assembly comprising further at least one temperature sensor arranged in the venting element for measuring the temperature of the venting element.

In a further aspect of the present invention there is provided a battery module comprising: a housing, at least one battery cell, the at least one battery cell comprising a venting gas discharging portion for allowing venting gases to be discharged therethrough, and the venting assembly according to the above-described aspect, wherein the at least one battery cell is arranged on the first surface of the base element of the at least one venting portion such that the venting gas discharging portion is facing the first surface of the base element.

In a further aspect of the present invention there is provided a battery pack comprising: a housing comprising a base plate, the base plate comprising the venting assembly according to the above-described aspect, and a plurality of battery cells, each of the plurality of battery cells comprising a venting gas discharging portion for allowing venting gases to be discharged therethrough, wherein at least one of the plurality of battery cells is arranged on the first surface of the base element of one venting portion of the venting assembly such that the venting gas discharging portion is facing the first surface of the base element.

In a still further aspect of the present invention there is provided a battery pack comprising: a housing, and a plurality of battery modules according to the above-described aspect, each of the plurality of battery modules being arranged in the housing.

### Brief description of the drawings

Embodiments of the present invention, which are presented for better understanding the inventive concepts, but which are not to be seen as limiting the invention, will now be described with reference to the figures in which:
- Figure 1: shows a thermal runaway sequence in a typical lithium-ion battery cell.
- Figure 2: shows a venting assembly according to an embodiment of the present invention.
- Figure 3: shows a venting assembly according to an embodiment of the present invention.
- Figure 4: shows a venting assembly according to embodiments of the present invention.
- Figure 5: shows a venting assembly according to an embodiment of the present invention.
- Figure 6: shows a venting assembly according to embodiments of the present invention.
- Figure 7: shows a venting assembly according to an embodiment of the present invention.
- Figure 8: shows a battery module according to embodiments of the present invention.
- Figure 9: shows a battery pack according to an embodiment of the present invention.
- Figure 10: shows a battery module according to an embodiment of the present invention.
- Figure 11: shows a battery pack according to an embodiment of the present invention.
- Figure 12: shows a battery pack according to an embodiment of the present invention.

### Detailed description

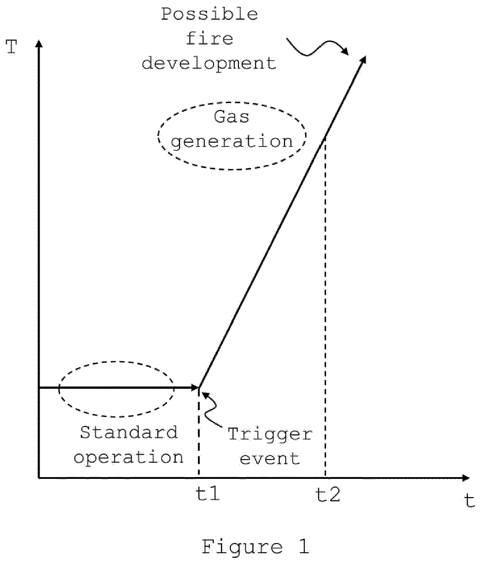

Figure 1 shows a temperature raise during a thermal runaway event in a typical lithium-ion battery cell. A thermal runaway event is a sequence of exothermic reactions in the battery cell leading to an uncontrolled increase of the temperature and to generation of high-temperature gases that are vented from the battery cell.

The horizontal arrow line shows the development of the temperature with time in a case of a standard operation of the lithium-ion battery cell. As expected, if the generated heat from the lithium-ion battery cell is properly removed from the battery cell, the temperature of the lithium-ion battery cell may be considered to be constant or almost constant.

However, at a time t1 a safety relevant event e.g., over-charge, over-temperature or crash scenario, may occur in the battery cell. This safety relevant event may be seen as a trigger event, triggering the thermal runaway event and accordingly the steep temperature rise with time. During the steep temperature rise, several events such as a reaction between anode and electrolyte, separator shutdown and melting, reaction between cathode and electrolyte as well as reactions involving binder may occur.

From these, the separator shutdown and melting is an endothermic reaction, however, the reaction between the anode and the electrolyte, the reaction between the cathode and the electrolyte and the reactions involving the binder are exothermic reactions in which heat is released which causes the temperature to steeply rise with time. This sequence of exothermic reactions is also called a thermal runaway. At a certain time point t2, gases will be generated in the lithium-ion battery cell that are to be vented from the battery cell. The generated gases are a collection of high-temperature gases and particulates at high temperatures which are vented before eventually a fire develops and cell rapture and/or cell explosion occurs.

Detecting a thermal runaway event may involve detecting one or more indicators of the thermal runaway event.

One indicator may be the voltage/current drop in the battery cell. This may be detected by way of voltage monitoring, for example via a flexible printed circuit (FPC) or a battery management system (BMS). However, this way of detecting a thermal runaway event may be slow in response and may require some time to develop, and therefore not sufficient to cope with the requirement of the above-elaborated time window, may not be effective for large blocks of battery cells connected in parallel and the quality of the process for detecting the thermal runaway event may be difficult to control and not reliable in all possible cases of thermal runaway.

Further indicator may be the generation of high temperature venting gases. This may require gas sensing. However, the efficiency of this way of detecting a thermal runaway event may depend on the placement of the gas sensors in the battery pack. In addition, using gas sensors may significantly increase the manufacturing costs for the battery pack.

An indicator may also be the temperature of the battery cell. This may require detecting the temperature of the battery cell with one or more temperature sensors. However, this way of detecting a thermal runaway event may be slow and therefore not sufficient to cope with the requirement of the above-elaborated time window, may require disposing a large number of temperature sensors within the battery pack for detecting the temperature of the plurality of battery cells which may increase the manufacturing costs for the battery pack.

An indicator may also be the increase of pressure in the housing of the battery pack. The increase of pressure may be sensed with pressure sensor. Also this way of detecting a thermal runaway event may be slow and therefore not sufficient to cope with the requirement of the above-elaborated time window, may be unreliable since the rate of gas generation and hence the rate of pressure increase may vary.

Battery cell swelling may also be an indicator for a thermal runaway event. Sensing battery cell swelling may require force sensing. This way of detecting a thermal runaway may also requires disposing many sensors within the housing of the battery pack which may increase the manufacturing costs of the battery pack.

Smoke generation may also be an indicator of a thermal runaway event. This way of detecting a thermal runaway event may require smoke sensing. However, this way of detecting a thermal runaway event may be unreliable since the generated smoke may not be related to a thermal runaway sequence in a battery cell but may be caused by other factors.

In using any of these indicators, it may be needed that the corresponding signals of the corresponding sensors are sent to a corresponding battery management system (BMS) that further processes the received signals. The BMS may be the BMS of the individual battery modules in the battery pack or may be the BMS of the battery pack.

It is also possible that temperature sensing and sensing the increase of a pressure are combined for detecting a thermal runaway event such that the appropriate sensors, such as one or more temperature sensors and pressure sensors may be placed at the interface between the battery pack venting gas expulsion unit and the vehicle interface. This provides for a better integration of the control loop for detection of the thermal runaway event with the vehicle's electronic control unit (ECU) while eliminating the dependency on the battery management system (BMS). However, this method of detecting a thermal runaway event has a drawback in that the temperature and the pressure are sensed away from the real source of the thermal runaway and that is the one or more battery cells provided in the battery pack. Further, this way of detecting a thermal runaway event gives an information about a thermal runaway on a battery pack level. This way of detecting a thermal runaway cannot give a more precise information about the specific cause for the thermal runaway, for example the specific battery module inside the battery pack, the battery module containing the battery cell being the cause for the detected thermal runaway event on the battery pack level. The information about the specific battery module containing the battery cell being the cause for the detected thermal runaway event is important for later diagnostic processes and servicing of the specific battery module.

Further, in the so-called cell-to-pack battery designs (CTP) in which battery packs based on, normally, lithium-ion cells are manufactured by directly integrating individual lithium-ion cells into the battery pack, without using battery-module based physical separation of the battery cells, and may be fully structurally potted, there is only little, if at all, free space in the battery pack. As a consequence, there is only little, if at all, free air volume. This construction makes difficult the sensing of the temperature and the pressure since the sensors require free space to be mounted. Further, this construction makes difficult, in particular, the sensing of the pressure, since the pressure sensor requires free air volume for sensing pressure changes. Moreover, wiring is required between the battery pack and the vehicle ECU and there is a risk that the respective sensors are damaged or entirely destroyed due to direct exposure to the high temperatures that develop during the thermal runaway event.

The present invention proposes a venting assembly for venting the gases from at least one battery cell and proposes sensing the temperature of the venting assembly as an indication for a thermal runaway event. The gases may be the generated gases during a thermal runaway event.

It is to be noted that the venting assembly according to the embodiments of the present invention described here as well as the battery module and the battery pack according to the embodiments of the present invention described here can be combined with one or more of the above ways for detecting the above-described indicators of a thermal runaway event.

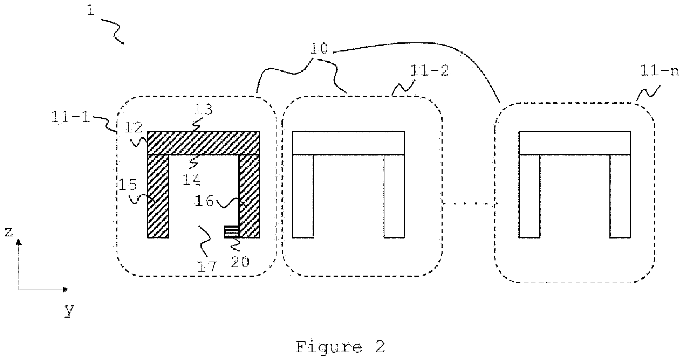

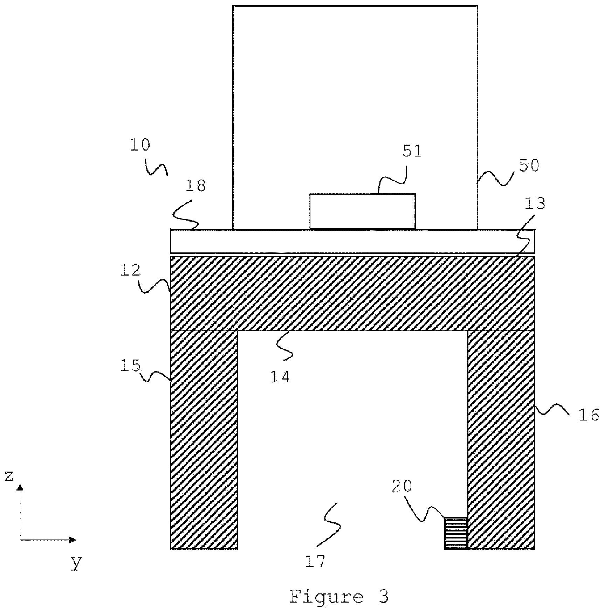

Figure 2 shows a venting assembly 1 according to an embodiment of the present invention. The venting assembly 1 comprises a venting element 10. The venting element 10 has at least one venting portion 11-1, 11-2,...,11-n. Figure 2 shows the venting element 10 having a plurality of venting portions 11-1, 11-2, ..., 11-n, however, this is not limiting and the venting element 10 may have one venting portion 11-1. In other words, in one or more embodiments of the present invention, it is possible that the venting element 10 comprises a single venting portion 11-1 (in these embodiments, the wording "venting element" and "venting portion" may be interchangeably used). Such embodiment of the present invention is shown in figure 3.

In the venting element 10, as it is shown in figure 2, the plurality of venting portions 11-1, 11-2,...,11-n are arranged along a first direction (y direction in figure 2). There is shown in figure 2 that there is a gap between the venting positions 11-1, 11-2,...,11-n, however, this is not limiting, as elaborated later below.

The at least one venting portion 11-1, 11-2,...,11-n comprises a base element 12 having a first surface 13 for accommodating at least one battery cell and a second surface 14 facing the first surface 13 (facing the first surface 13 along the z direction in figure 2). The at least one battery cell may be, for example, a lithium-ion battery cell. The at least one battery cell may be a prismatic battery cell or a cylindrical battery cell or other shape battery cell with a hard casing design to expel venting gases in a certain direction.

The at least one venting portion 11-1, 11-2,...,11-n comprises further at least two side walls (a first side wall 15 and a second side wall 16) arranged to form a venting channel 17 beneath the second surface of the base element 12. The side walls 15, 16 may have a predetermined thickens. The thickness may be chosen for example such that it provides the required structural stability to the venting portion 11-1, 11-2,...,11-n, when the one or more battery cells are arranged on the first surface 13 of the base element 12 and in the same time it allows high pressure venting gases to break through.

The venting assembly 1 further comprises at least one temperature sensor 20 arranged in the venting element 10 for measuring the temperature of the venting element 1. As will be elaborated below, in one or more embodiments of the present invention, the venting element 10 may comprise more than one temperature sensor 20. In one or more embodiments of the present invention in which the venting element comprises more than one temperature sensor 20, more than one temperature sensor 20 may be provided per venting portion 11-1, 11-2,...11-n, or one temperature sensor 20 may be provided per one venting portion 11-1, 11-2,...11-n or one temperature sensor 20 may be provided per two or more venting portions 11-1, 11-2,...11-n.

In one or more embodiments of the present invention, the material of the venting element 10 has a thermal conductivity exceeding a predefined threshold. In general, the material for the venting element 10 may be categorized in four general categories: plastic material, metal, ceramic and composite material. In one or more embodiments of the present invention, the material may be a material that also possesses required mechanical properties. The required mechanical properties may relate to the material enabling the required structural stability to the venting element 1. In the above-defined four general categories, a plastic material in general has a thermal conductivity in the range of 0.2-1 W/mK while aluminium as an example of metal has a thermal conductivity of 180-220 W/mk. Ceramics and composite material have poorer thermal conductivity properties than a plastic material. Composite material may also be highly flammable making them unsuitable candidates for the material of the venting element 1. On the other hand, aluminium has better mechanical properties, such as stiffness and rigidity, than at least some of the plastic materials.

The required mechanical properties of the material may be determined by the ultimate tensile strength of the material and the Young modulus of the material. However, the position of the at least one temperature sensor 20 in the venting element 10 may also influence the choice of the material. In one or more embodiments of the present invention, the predefined threshold is dependent on at least one of the position of the at least one temperature sensor 20 arranged in the venting element 10 and the response time of the at least one temperature sensor 20. Other factors, such as the mechanical properties and the weight of the material may also be considered, for determining the pre-defined threshold. This means that the choice of the material may take into account one or more of the thermal conductivity of the material, the mechanical properties of the material, the position of the at least one temperature sensor, the response time of the at least one temperature sensor, but also whether the material facilitates the manufacturing process of the venting element 1, the abundance of the material and similar.

In one or more embodiments of the present invention, the material of the venting element 10 is aluminium.

In the at least one venting portion 11-1, 11-2,...,11-n, the thickness of the base element 12 between the first surface 13 and the second surface 14 may be a pre-defined thickness. The pre-defined thickness may be configured such that the base element 12 is punctured under the pressure of gases discharged from the at least one battery cell arranged on the first surface 13 of the base element 12. It is to be understood that the mentioned puncturing relates to a thermal runaway event when (high temperature) gases are generated in the battery cell that are to be vented from the battery cell.

Preferably, the pre-defined thickness is in the range from 1 mm to 2 mm.

Accordingly, in the venting assembly 1 the at least one battery cell 50 can be arranged on the venting portion 11-1, 11-2,...,11-n of the venting element 10 such it its venting gas discharging portion 51 faces the base element 12, as is shown in figure 3. In a thermal runaway event, the generated high temperature gases vented from the battery cell 50 via the venting gas discharging portion 51, will puncture, due to the high pressure, the base element 12 that has the predefined thickness between the first surface 13 and the second surface 14. Thereafter, the generated gases will be routed in the channel 17 formed beneath the base element 12 by the two side walls 15, 16.

Taking advantage of the thermal conductivity of the material of the venting element 10 exceeding a predefined threshold, the venting element 10 will rapidly change its temperature, and the at least one temperature sensor 20 arranged in the venting element 10 will measure the temperature increase of the venting element 10 as an indication that high temperature gases have been vented from the at least one battery cell 50 and hence a thermal runaway event has occurred in the battery cell 50. The measurement of the at least one temperature sensor 20 may, for example, show a spike in a measurement curve. The at least one temperature sensor 20 may be configured to send the measurement to a unit in the system, as elaborated later below. The unit may evaluate the spike as a thermal runaway event.

Therefore, due to the thermal conductivity of the material of the venting element 10 exceeding the predefined threshold, the temperature of the venting element will increase rapidly due to the high temperature gases being released in the channel 17 in a case of a thermal runaway event in the battery cell 50, the at least one temperature sensor 20 detecting the fast increase in the temperature of the venting element 1.

In an embodiment of the present invention, an insulation layer may be provided on the first surface of the base element 12. The insulation layer 12 may mitigate the risk of possible short-circuits between the battery cells. This may be required in embodiments of the present invention in which the material of the venting element 10 is an electrically conductive material. There is shown in figure 3 that the at least one battery cell 50 is arranged, when the insulation layer 18 is provided, on the surface of the insulation layer 18. It is to be understood that also the material of the insulation layer 18 and the thickness of the insulation layer 18 are chosen such as to be punctured by the generated gases vented from the battery cell 50 via the venting gas discharging portion 51 in a thermal runaway event.

The insulation layer can be deposited by over-moulding with injection moulding with a plastic material such as a polyamide. Alternatively, the insulation layer 18 can be deposited by spraying it on the first surface 13 of the base element 12. It is also possible that one or more discrete insulation coating sheets are provide as the insulation layer 18.

In one or more embodiments of the present invention, the venting element 10 may be a single-piece extruded element. In other words, the venting element 10 may be formed by an extrusion process. Providing the venting element 10 as a single-piece extruded element may increase the structural stability of the venting element 1.

The at least one venting portion 11-1, 11-2,...,11-n may accommodate one or more than one battery cells 50 on the first surface 13 of the base element 12. The maximum number of battery cells 50 that can be accommodated on the first surface 13 of the base element 12 of one venting portion 11-1, 11-2,...,11-n can be limited by several factors. One factor may be structural strength of the venting portion 11-1, 11-2,...,11-n in all three directions: x, y, and z. It is to be noted that in figure 2, the x direction is orthogonal to each of the y direction and the z direction. A large load in the z direction (due to too many battery cells 50 being accommodated on the first surface 13 of the base portion 12 of the venting portion 11-1, 11-2,...,11-n would cause a deformation or in a worse case a crush of the side walls 15, 16.

In addition, it is required that a minimum volume for venting the generated gases during a thermal runaway event and a minimum cross-section of the volume is provided in the channel 17. The minimum cross-section of the volume in the channel 17 determines the distance between the side walls 15, 16 and hence determined the length of the base portion 12 which determines the number of battery cells 50 that can be accommodated on the first surface 13 of the base portion 12 of one venting portion 11-1, 11-2,...,11-n. It is to be understood that the minimum volume for venting the generated gases during a thermal runway event may also determine the height of the side walls 15, 16.

In addition, it is required that some limits related to the extrusion technology in the embodiments of the present invention in which the venting element is formed by an extrusion process, such as limitations related to the spacing between the side walls 15, 16 and thickness of the side walls 15, 16 and the thickness of the base element 15 are maintained.

Moreover, a gap may need to be provided between the battery cells for safety reasons.

Each of these factors may determine the geometrical layout (distance between the side walls 15, 16, thickness of the side walls 15, 16) of the venting elements. In addition, many battery modules and/or battery packs are limited in the z direction.

The at least one temperature sensor may be any one of a thermocouple, a thermistor and resistance temperature detector sensor. The choice of the at least one temperature sensor may depend, for example on its robustness when exposed to high temperature gases and on its response time to temperature change of the venting element 1.

Figure 2 shows the temperature sensor 20 as being provided on the inner side of the side wall 16. However, this is not limiting. The number of temperature sensors 20 and the position of each of the temperature sensors 20 in the venting element 10 may vary in embodiments of the present invention. The number of temperature sensors 20 and their position may in turn influence the precision of locating the battery cell in which a thermal runaway event occurred. In general, in embodiments of the present invention, the one or more temperature sensors 20 may be provided in any one of or be attached to the first side wall 15, the second side wall 16 and the base element 20. It is to be understood that the temperature sensor needs to be provided in the vicinity of the venting element 10 in order to rapidly measure the temperature change of the venting element 1.

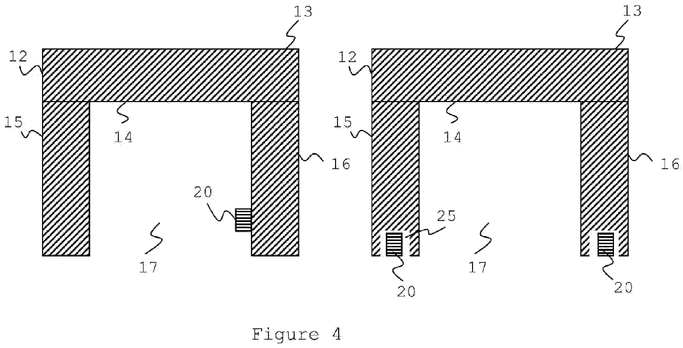

In one embodiment of the present invention, the at least one temperature sensor 20 may be attached to any one of the first side wall 15, the second side wall 16 and the base element 20. This is shown in the left panel in figure 4. More specifically, there is shown in figure 4 that the temperature sensor 20 is attached on the inner side of the side wall 16.

In another embodiment of the present invention, the at least one temperature sensor 20 may be provided in a recess formed in any one of the first side wall 15, the second side wall 16 and the base element 20. Providing the temperature sensor 20 in a recess enables higher protection for the temperature sensor 20 when the generated gases during a thermal runaway event are vented in the channel 17. There is shown in the right panel in figure 4 that a recess 25 is formed at the bottom end of each of the side walls 15, 16 and a temperature sensor 20 is accommodated in each of the recesses 25. Providing the recess 25 at the bottom end of the side wall 15, 16 enables that the temperature senor is not directly exposed on the generated gases during a thermal runaway that are vented through the channel 17. Further, providing the recess 25 at the bottom end of the side wall 15, 16 enables better support for the fixing of the wiring for the temperature sensor 20 and for the routing of the wiring outside the venting element 1.

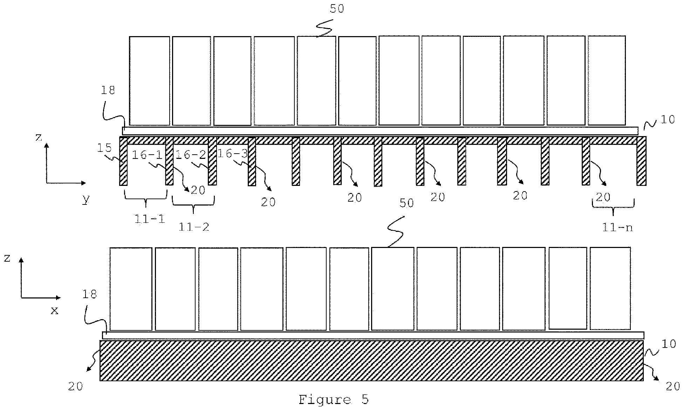

There is shown in figure 5 an embodiment of the present invention in which the venting element 10 has a plurality of venting portions 11-1, 11-2,..., 11-n and no gap is provided between the venting portions 11-1, 11-2,...,11-n (the upper panel of figure 5 shows a cross-section along the y-axis, the lower panel shows a cross-section along the x-axis). In this embodiment of the present invention, the venting portions 11-1, 11-2,...,11-n are arranged such that that two neighbouring venting portions have a common side wall. As it is shown in figure 5 upper panel, the first two neighbouring portions 11-1 and 11-2 have one common side wall 16 (16-1).

Here, the venting element 10 may be such that the common side wall 16 is formed by two side walls, that is, it is formed by the side wall of the first venting portion 11-1 abutting against the side wall of the second venting portion 11-2. Alternatively, the venting element 10 is such that the common side wall is a single-element side wall. The common side wall may have the same thickness as the left most side wall of right most side wall, however, this is not limiting.

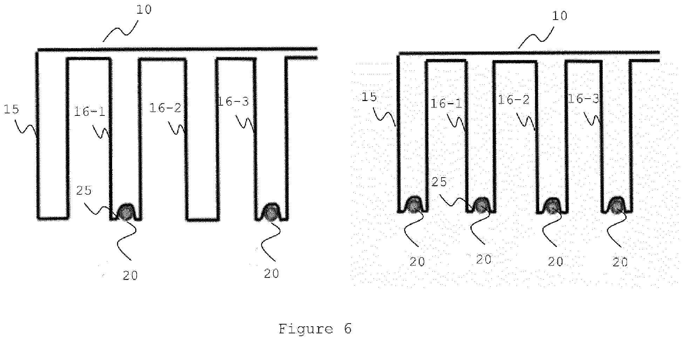

In this embodiment of the present invention, the venting element 10 comprises more than one temperature sensor 20, and a temperature sensor 20 is provided in every other common side wall. This means that, from the left to the right side in figure 5, a temperature sensor is provided in the common side wall 16-1, the common side wall 16-3 and so on in every other common side wall. This arrangement of the temperature sensors 20 is also shown in the left panel in figure 6.

In this embodiment of the present invention, the provided temperature sensors 20 may be arranged in a recess 25 provided at the bottom end in every other common side wall.

In other embodiment of the present invention in which the venting portions 11-1, 11-2,...,11-n are arranged such that that two neighbouring venting portions have a common side wall, it is possible that a temperature sensor is provided in every side wall 15, 16 of the venting element 1. This is shown in the right panel in figure 6 for the left most side wall 15 and the subsequent common side walls 16-1, 16-2...

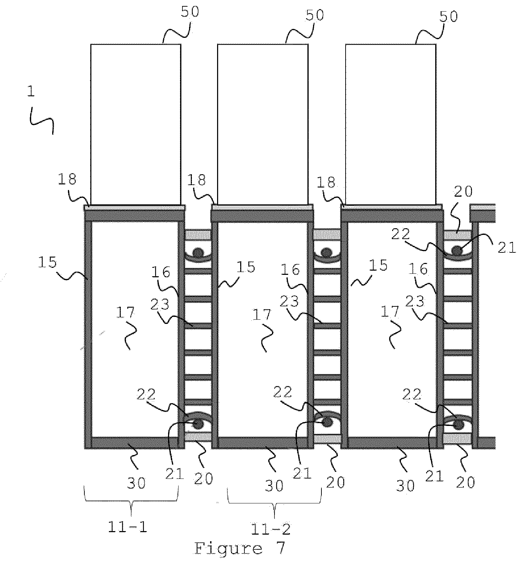

There is shown in figure 7 a further embodiment of the present invention. In this embodiment of the present invention, the venting element 10 has a plurality of venting portions 11-1, 11-2,..., 11-n. The venting portions 11-1, 11-2,...,11-n are arranged such that a pre-defined gap is formed between the side walls 15, 16 of two neighbouring venting portions 11-1, 11-2,...,11-n. On each venting portion one battery cell 50 is arranged.

The size of the pre-defined gap may be influenced by the required cell-to-cell gap. The cell-to-cell gap may be provided for avoiding potential safety events so the larger this cell-to-cell gap is, the larger the pre-defined gap between the side walls 15, 16 will be and vice versa. There is further shown in figure 7 that temperature sensors 20 are arranged in the gap between the side walls 15, 16 of two neighbouring venting portions. There is shown in figure 7 that the temperature sensors 20 are accommodated at the bottom part of the pre-defined gap and the upper part of the pre-defined gap. Accommodating the temperature sensors 20 at the bottom part of the pre-defined gap and/or the upper part of the pre-defined gap may facilitate the manufacturing process of the venting element 1 in particular in view of facilitating the assembly of the temperature sensors 20 on the venting element 1. It is also possible to provide one or more temperature sensors 20 in the middle of the pre-defined gap or approximately in the middle of the pre-defined gap. This may be performed by providing one or more recesses in the side walls 15, 16, and accommodating the temperature sensors 20 in the provided recesses.

There is further shown in figure 7 that at least one lip element 22 is formed in the pre-defined gap for accommodating the wiring 21 for the at least one temperature sensor 20. The wiring 21 may be one or more wires. The lip element 20 extends between the side wall 15, 16 of one of the neighbouring venting portions 11-1, 11-2,...,11-n and the side wall 15, 16 of the other of the neighbouring venting portions 11-1, 11-2,...,11-n. Preferably, the lip element has a curved shape. The curved shape of the lip element 22 may match the shape of the wiring 21 and hence may facilitate the accommodation of the wiring 21.

There is further shown in figure 7 that at least one connection element 23 is provided extending between the side wall 15, 16 of one of the neighbouring venting portions 11-1, 11-2,...,11-n and the side wall 15, 16 of the other of the neighbouring venting portions 11-1, 11-2,...,11-n. Preferably, the material of the connection element 23 is the material of the venting element 1. The at least one connection element 23 may enable that less material for the venting element 10 is used which would avoid increasing the weight of the venting element 10, while in the same time it provides a structural stability to the venting element 10. The number of connection element 23 may be determined such that the venting element 10 may sustain a side crush load and heavy assembly loads.

There is further shown in figure 7 that at the bottom of the channel 17 an element 30 is provided. This element 30 may be a base plate of a battery pack housing. Although not shown in the figure, the base plate may be a continuous plate on which the venting assembly is assembled. The base plate may have a uniform thickness but may also have portions with different thicknesses. For example, the thickness of the portions of the base plate between the venting portions 11-1, 11-2,...,11-n may be different than, for example smaller than, the thickness of the portions of the base plate on which the venting positions 11-1, 11-2,...,11-n are mounted.

The number of temperature sensors 20 as well as their location in the venting element 10 will vary in dependence on the requirements of the system in which the venting assembly 1 is used. Also, the used chemistry of the battery cells 50, for example the lithium-ion battery cells, their number, the cell-to-cell safety gap as well as possible safety events that may occur during charging and discharging may also very depending on the system design. For determining the number of temperature sensors 20 and/or their location in the venting element 10, for example, high fidelity simulation models and a series of single battery cell and multiple battery cell thermal runaway verification tests may be performed. It is however, preferable that the at least one temperature sensor 20 is arranged in the venting element as close as possible to the elements (base portion 12, sidewall 15, 16) of the venting element 10. In this way, not only the temperature sensor 20 can rapidly detect sudden increase of the temperature of the venting element 10 but it will also be robust to the conditions in the venting element 10 since if the temperature sensor 20 is directly exposed to the high temperature generated gases it will be damaged or in the worst case even destroyed.

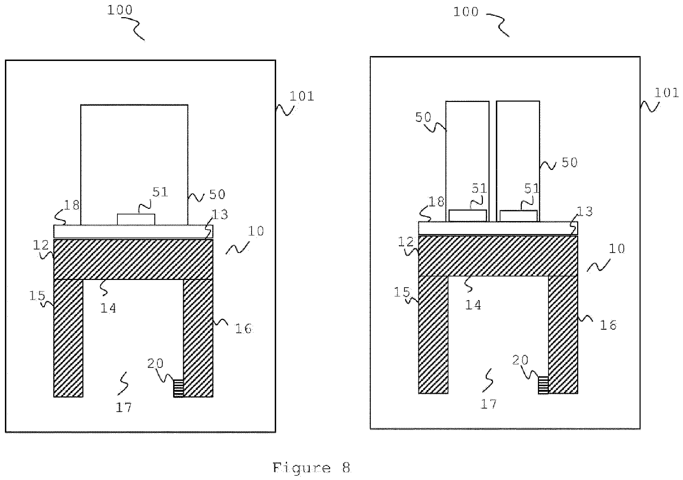

In an embodiment of the present invention, shown in the left panel of figure 8, there is provided a battery module 100 comprising: a housing 101 and a battery cell 50, comprising a venting gas discharging portion 51 for allowing venting gases to be discharged therethrough. The battery module 100 comprises further the venting assembly 1 described above. There is shown in figure 8 that the venting assembly 1 comprises a venting element 10 having a single venting portion, however it may comprise a plurality of venting portions, as elaborated above. The one battery cell 50 is arranged on the first surface 13 of the base element 12 (more specifically, it is shown in figure 8 that it is arranged on the insulating layer 18 provided on the first surface 13 of the base element 12) of the at least one venting portion such that the venting gas discharging portion 51 is facing the first surface 13 of the base element 12.

There is shown in the right panel of figure 8 an embodiment of the present invention in which more than one battery cells 50 are arranged on the first surface 13 of the base element 12 of the at least one venting portion (more specifically, it is shown in figure 8 that more than one battery cell 50 is arranged on the insulating layer 18 provided on the first surface 13 of the base element 12). The battery module 100 is to be understood as a physical unit. One or more battery modules may be provided in a housing of a battery pack.

The battery module 100 may comprise a battery management system (not shown in figure 8).

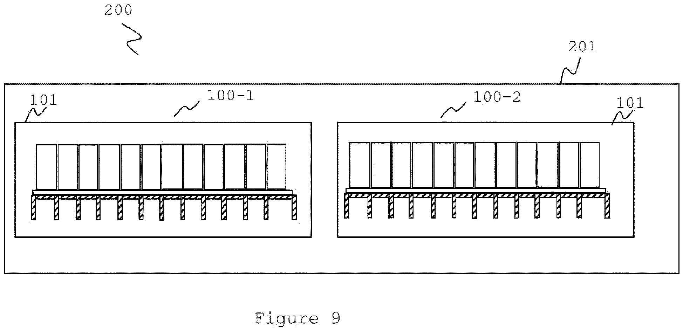

A battery pack according to an embodiment of the present invention is shown in figure 9. The battery pack 200 comprises a housing 201. In the housing 201 two battery modules 100-1, 100-2 are provided. Each of the battery modules 100-1, 100-2 is the battery module described above. It is to be understood that the battery pack 200 shown in figure 9 may comprise N battery modules. Each of the N battery modules is the battery module 100 described above.

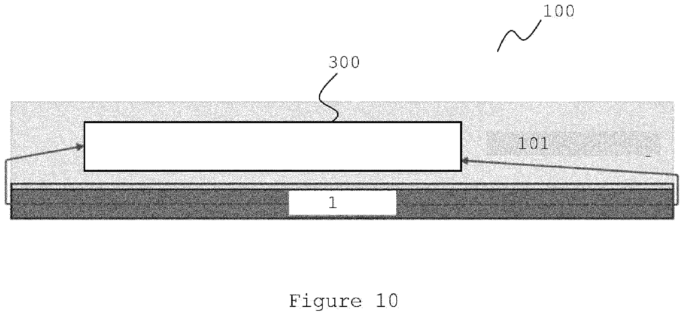

As elaborated above, the battery module 100 described above may comprise a battery management system (BMS) 300. This is shown in figure 10. In this embodiment of the present invention, the at least one temperature sensor 20 provided in the venting element 10 of the venting assembly 1 may be configured to send the temperature measurements to the BMS 300 of the battery module 100. In this embodiment of the present invention, the wiring 21 of the at least one temperature sensor 20 can be directly routed via the venting assembly 1 and a connection can be established with the BMS 300. The BMS 300 may be a printed circuit board PCB architecture BMS. Depending upon the architecture of the BMS PCB, an integrated control unit, for example an integrated microcontroller chip can be implemented on the PCB which can run a thermal runaway algorithm based on the received temperature measurements of the at least one temperature sensor 20 for evaluating the temperature measurements of the at least one temperature sensor 20 and can relay the information directly to a control unit in the vehicle control area network CAN (if the battery module is provided in a vehicle) that a thermal runaway event has been detected. The control unit in the vehicle CAN may then trigger a thermal runaway warning, for example, may trigger displaying of a notification to the occupant of the vehicle to warn the occupant of the vehicle of the danger.

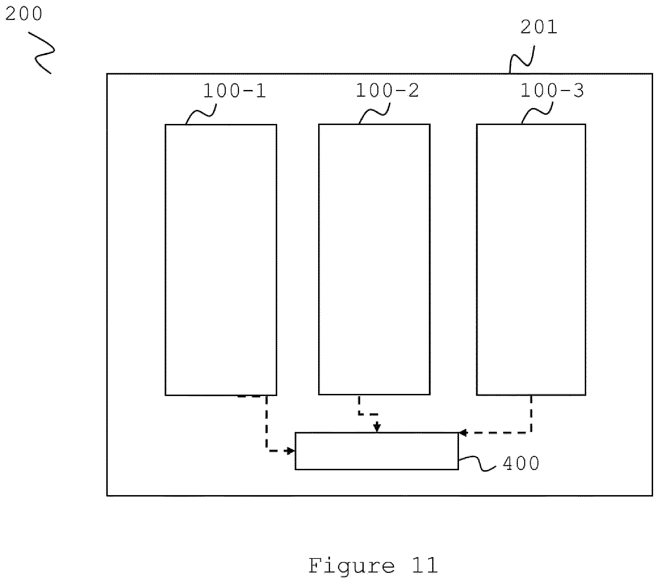

In a further embodiment of the present invention as shown in figure 11 a battery management system 300 may be provided in the battery pack 200. This battery management system 300 may be seen as a master battery management system (master BMS). It is to be noted that also in this embodiment, a battery management system 300 may be provided in each of the battery modules 100-1, 100-2,...,100-N. However, in this embodiment of the present invention, the at least one temperature sensor 20 provided in each of the venting assemblies 1 provided in each of the battery modules 100-1, 100-2,...,100-N may be configured to send the temperature measurements to the master BMS 400. In this embodiment, the master BMS 400 can run a thermal runaway algorithm based on the received temperature measurements of the at least one temperature sensor 20 of the corresponding battery module 100-1, 100-2,...,100-N for evaluating the temperature measurements and can trigger the thermal runaway warning to the vehicle occupant via the control unit in the vehicle CAN.

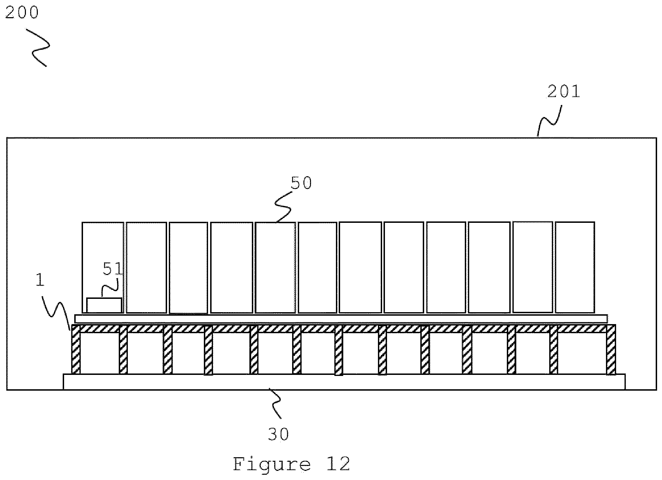

There is shown in figure 12 a further embodiment of the present invention. In this embodiment of the present invention, there is provided a battery pack 200 comprising a housing 201. The housing 201 comprises a base plate 30. The base plate comprises the venting assembly 1 described above. The base plate 30 comprising the venting assembly 1 may mean that the base plate 30 and the venting assembly 1 are formed as a single-piece element, for example during extrusion, or the venting assembly 1 is mounted on the base plate 30. The battery pack 200 comprises further a plurality of battery cells 50. Each of the plurality of battery cells 50 comprises a venting gas discharging portion 51 for allowing venting gases to be discharged therethrough.

At least one of the plurality of battery cells 50 is arranged on the first surface 13 of the base element 12 of one venting portion 11-1, 11-2,...,11-n of the venting element 10 of the venting assembly 1 such that the venting gas discharging portion 51 is facing the first surface 13 of the base element 12.

Hence, the venting assembly 1 of the embodiments of the present invention described above can be easily applied in a cell-to-pack battery (CTP) design which may be a fully structural potted battery pack since it does not rely on the presence of an unused space in the battery pack.

In a battery system there are normally three levels of detecting a thermal runaway event: i) on a battery cell level, ii) on a battery module level and iii) on a battery pack level.

In the embodiments of the present invention described above, the detection of a thermal runaway event is brought close to level i) and level ii). This enables that a diagnosis of the battery module in which thermal runaway event occurred is easily performed and the battery module in which the thermal runaway event occurred can be easily replaced, thereby improving the serviceability of the battery pack design.

Accordingly, the present invention also provides for a method for detecting a thermal runaway event in the battery module described above or the battery pack described above.

The venting assembly 1 described above and measuring the temperature of the venting assembly 1 as an indication for a thermal runaway event satisfies the above-described factors to be complied with when detecting a thermal runaway. Another advantage of the venting assembly 1 described above is the redundancy of application as it is simplifies the design of the battery module and/or the battery pack and is compatible also with existing battery module designs and/or battery pack designs. Further, the venting assembly is scalable to a battery module of any size. This may not be achieved with the above-described indicators for thermal runaway since as the size of the battery module and/or the battery pack increases, the number of battery cells also increases meaning that the number of possible sources for thermal runaway also increases. This implies increasing the number of appropriate sensors described above for the respective thermal runaway indicators. On the other hand, the venting assembly 1 described above is highly scalable requiring no or only a minimal increase in the number of provided temperature sensors.

Although detailed embodiments have been described, these only serve to provide a better understanding of the invention defined by the independent claims and are not to be seen as limiting.

## Claims

1. A venting assembly for venting gases from at least one battery cell,
the venting assembly comprising:
a venting element having at least one venting portion, the venting portion comprising a base element having a first surface for accommodating the at least one battery cell and a second surface facing the first surface, the venting portion comprising further at least two side walls arranged to form a venting channel beneath the second surface of the base element, the venting assembly further comprising:
at least one temperature sensor arranged in the venting element for measuring the temperature of the venting element.

2. The venting assembly according to claim 1,
wherein the material of the venting element has a thermal conductivity exceeding a predefined threshold, wherein the predefined threshold is dependent on at least one of the position of the at least one temperature sensor arranged in the venting element and the response time of the at least one temperature sensor, wherein, preferably, the material of the venting element is aluminium.

3. The venting assembly according to claim 1 or claim 2,
wherein in the at least one venting portion, the thickness of the base element between the first surface and the second surface is a pre-defined thickness, wherein the pre-defined thickness is configured such that the base element is punctured under the pressure of gases discharged from the at least one battery cell, wherein preferably, the pre-defined thickness is in the range from 1 mm to 2 mm.

4. The venting assembly according to any one of claims 1 to 3, wherein the at least one venting portion further comprises
an insulation layer provided on the first surface of the base element.

5. The venting assembly according to any one of claims 1 to 4, wherein the at least one temperature sensor is any one of a thermocouple, a thermistor and resistance temperature detector sensor.

6. The venting assembly according to any one of claims 1 to 5, wherein the venting element is a single-piece extruded element.

7. The venting assembly according to any one of claims 1 to 6,
wherein in the at least one venting portion at least one of the side walls has a recess formed at the bottom end for accommodating the at least one temperature sensor, wherein the at least one temperature sensor is accommodated in the recess.

8. The venting assembly according to any one of claims 1 to 7,
the venting element having a plurality of venting portions, wherein the venting portions are arranged such that two neighbouring venting portions have a common side wall.

9. The venting assembly according to claim 8, wherein at least one temperature sensor is provided in every other common side wall.

10. The venting assembly according to any one of claims 1 to 7,
the venting element having a plurality of venting portions, wherein the venting portions are arranged such that a pre-defined gap is formed between the side walls of two neighbouring venting portions.

11. The venting assembly according to claim 10, wherein at least one temperature sensor is arranged in the gap between the side walls of two neighbouring venting portions.

12. The venting assembly according to claim 11, wherein at least one lip element is formed in the gap for accommodating the wiring for the at least one temperature sensor, said lip element extending between the side wall of one of the neighbouring venting portions and the side wall of the other of the neighbouring venting portions, wherein preferably, the lip element has a curved shape.

13. The venting assembly according to any one of claims 9 to 12, wherein at least one connection element is provided extending between the side wall of one of the neighbouring venting portions and the side wall of the other of the neighbouring venting portions, wherein preferably the material of the connection element is the material of the venting element.

14. A battery module comprising:
a housing,
at least one battery cell, the at least one battery cell comprising a venting gas discharging portion for allowing venting gases to be discharged therethrough, and
the venting assembly according to any one of claims 1 to 12,
wherein the at least one battery cell is arranged on the first surface of the base element of the at least one venting portion such that the venting gas discharging portion is facing the first surface of the base element.

15. The battery module according to claim 14, wherein a plurality of battery cells are arranged on the first surface of the base element of the at least one venting portion.

16. A battery pack comprising:
a housing comprising a base plate, the base plate comprising the venting assembly according to any one of claims 1 to 11, and
a plurality of battery cells, each of the plurality of battery cells comprising a venting gas discharging portion for allowing venting gases to be discharged therethrough,
wherein
at least one of the plurality of battery cells is arranged on the first surface of the base element of one venting portion of the venting assembly such that the venting gas discharging portion is facing the first surface of the base element.

17. A battery pack comprising:
a housing,
and a plurality of battery modules according to claim 13, each of the plurality of battery modules being arranged in the housing.
